# EUROPÄISCHE PATENTSCHRIFT

(11) **EP 2 727 693 B1**
(45) Veröffentlichungstag und Bekanntmachung des Hinweises auf die Patenterteilung: **14.01.2015**
(21) Anmeldenummer: 12191274.5
(22) Anmeldetag: 05.11.2012
(51) Int. Cl.: B29B 11/16, B29C 70/38, B29C 70/54, B29C 70/30

(54) **Verfahren zum Herstellen von Faservorformlingen**
Method for manufacturing fibre preforms
Procédé de fabrication de préformes en fibres

(43) Veröffentlichungstag der Anmeldung: 07.05.2014
(73) Patentinhaber: Toho Tenax Europe GmbH, 42103 Wuppertal (DE)
(72) Erfinder: Schneider, Markus, 40237 Düsseldorf (DE); Lehmhaus, Björn, 01445 RADEBEUL (DE)
(74) Vertreter: Schröder, Richard

(56) Entgegenhaltungen:
- JP-A- 2008 254 191
- US-A- 3 810 805
- US-A- 5 866 253
- US-B1- 6 251 185

## Beschreibung

Die vorliegende Erfindung betrifft ein Verfahren zum Herstellen eines Faservorformlings durch Ablegen von Verstärkungsfaserbündeln auf einer Oberfläche und/oder auf der Oberfläche abgelegten Verstärkungsfaserbündeln. Die Erfindung betrifft des Weiteren ein Verfahren zur Herstellung eines Faserverbundwerkstoff-Bauteils unter Verwendung eines solchermaßen hergestellten Faservorformlings.

Insbesondere im Bereich der Luft- und Raumfahrtindustrie, aber auch z.B. im Bereich des Maschinenbaus oder in der Automobilindustrie, werden in zunehmendem Maße Bauteile aus Faserverbundwerkstoffen eingesetzt. Faserverbundwerkstoffe bieten gegenüber Metall oftmals den Vorteil eines geringeren Gewichts und/oder höherer Festigkeiten. Der Volumenanteil der Verstärkungsfasern und insbesondere auch die Ausrichtung der Verstärkungsfasern haben maßgeblichen Einfluss auf die Belastbarkeit der Bauteile, vor allem im Hinblick auf deren Steifigkeit und deren Festigkeit. Allerdings müssen derartige hochbelastbare Werkstoff und Bauteile dennoch kostengünstig hergestellt werden können, um wirtschaftlich attraktiv zu sein.

Zur Herstellung solcher Verbundwerkstoff-Bauteile werden in einem Zwischenschritt zunächst aus Verstärkungsfasern sogenannte Faservorformlinge ("Preforms") hergestellt. Hierbei handelt es sich um textile Halbzeuge in Form von zwei- oder dreidimensionalen Gebilden aus Verstärkungsfasern, wobei die Form bereits nahezu der Form des endgültigen Bauteils entsprechen kann. Bei Ausführungsformen solcher Faservorformlinge, die im wesentlichen nur aus den Verstärkungsfasern bestehen und bei denen der für die Bauteilherstellung erforderliche Matrixanteil noch zumindest weitgehend fehlt, wird in weiteren Schritten ein geeignetes Matrixmaterial über Infusion oder Injektion, auch unter Anwendung von Vakuum, in den Faservorformling eingebracht. Abschließend erfolgt eine Aushärtung des Matrixmaterials bei in der Regel erhöhten Temperaturen und Drücken zum fertigen Bauteil. Bekannte Verfahren zur Infusion oder Injektion des Matrixmaterials sind hier das sogenannte Liquid Molding (LM-Verfahren) oder damit verwandte Verfahren wie z.B. Resin Transfer Molding (RTM), Vacuum Assisted Resin Transfer Molding (VARTM), Resin Film Infusion (RFI), Liquid Resin Infusion (LRI) oder Resin Infusion Flexible Tooling (RIFT). Das für die Herstellung der Faservorformlinge verwendete Fasermaterial kann auch bereits z.B. mit geringen Mengen eines Kunststoffmaterials, d.h. eines Bindermaterials, vorimprägniert sein, um die Fixierung der Verstärkungsfasern im Faservorformling zu verbessern. Derartige vorimprägnierte Garne werden beispielsweise in der WO 2005/095080 beschrieben.

Es sind auch Verfahren bekannt, bei denen Verbundwerkstoff-Bauteile aus Faservorformlingen hergestellt werden, die bereits einen für das Verbundwerkstoff-Bauteil ausreichenden Gehalt an Matrixmaterial aufweisen. In diesen Fällen können diese Faservorformlinge z.B. in einer Form unter Anwendung von erhöhtem Druck und/oder erhöhter Temperatur direkt zum Bauteil verpresst werden. Alternativ ist anstelle der Verwendung einer Form auch die Verwendung eines Vakuumsacks möglich, in den der Faservorformling eingebracht wird und nach Anlegen eines Vakuum und in der Regel bei erhöhter Temperatur zum Bauteil verpresst wird. Der für das Bauteil ausreichende Gehalt an Matrixmaterial kann beispielsweise erzielt werden, indem der Faservorformling aus Verstärkungsfaserbündeln hergestellt wird, die aus Prepregs mit entsprechendem Matrixgehalt hergestellt wurden. Alternativ kann beim Ablegen z.B. von Verstärkungsfaserbündeln zur Ausbildung des Faservorformlings zusätzliches Matrixmaterial z.B. bei der Ablage aufgesprüht werden.

Zur Herstellung von Faservorformlingen aus Verstärkungsfaserbündeln werden vielfach automatisierte Prozesse eingesetzt, bei denen die Faserbündel mittels gesteuerter Ablegeköpfe oder auch Faserablegevorrichtungen auf bzw. in entsprechende Formen abgelegt werden, wobei das Ablegen auch durch Sprühen der Faserbündel auf bzw. in die Formen erfolgen kann. In der Regel wird hierbei den Ablegeköpfen ein Endlosgarn der Verstärkungsfasern zugeführt, welches dann im Ablegekopf bzw. in der Faserablegevorrichtung mittels geeigneter Schneideinrichtungen auf die gewünschte Bündellänge abgelängt wird. Derartige Ablageköpfe mit einer Vorrichtung zum Ablängen von Fasersträngen werden beispielsweise in der WO 2011/045171 oder der US-A 3 011 257 offenbart.

Faservorformlinge können beispielsweise hergestellt werden, indem kurzgeschnittene Verstärkungsfasern zusammen mit einem Bindermaterial auf einen der Gestalt des gewünschten Faservorformlings angepassten luftdurchlässigen Schirm gesprüht und dispergiert und unter Anlegen von Vakuum auf dem Schirm gehalten werden, bis nach Abkühlung des Bindermaterials eine ausreichende Stabilität des Vorformlings erreicht ist. Ein derartiges Verfahren wird beispielsweise in der WO 98/22644 beschrieben. Bei dem Verfahren der WO 98/22644 werden die Verstärkungsfasern vorzugsweise als Kurzschnittfasern in zufälliger, isotroper Anordnung und Ausrichtung angeordnet. Gemäß den Beispielen der WO 98/22644 werden nur Faservolumenanteile im Bereich bis ca. 15 Vol.-% erreicht, und damit wegen der niedrigen Faservolumenanteile nur vergleichsweise geringe dickenbezogene Bauteilfestigkeiten.

Um höhere Faservolumenanteile in Preformen bzw. daraus hergestellten Bauteilen zu erzielen, ist es nach den Ausführungen der WO 2012/072405 von Vorteil, die Kurzschnittfasern in Form von Bündeln von Verstärkungsfasern abzulegen, wobei die Faserbündel bevorzugt eine Länge im Bereich von 10 bis 50 mm aufweisen. Darüber hinaus ist es mit Blick auf möglichst hohe Faservolumenanteile und damit auf die erzielbaren mechanischen Eigenschaften von Vorteil, wenn die Bündel eine möglichst geringe Anzahl von Verstärkungsfaserfilamenten aufweisen, wobei besonders bevorzugt eine Anzahl von 1000 bis 3000 Filamenten ist. Auf diese Weise entsteht ein nahezu isotroper Werkstoff mit in seinen Erstreckungsrichtungen nahezu isotropen mechanischen Eigenschaften. Gleichzeitig weist dieser Werkstoff wegen der relativ kleinen Bündeldimensionen keine oder nur wenige Bereiche mit erhöhtem Harzanteil und damit reduziertem Verstärkungsfaseranteil auf, die zu Schwachstellen im Bauteil führen können. Es ist leicht einsichtig, dass die Verwendung von Bündeln von Verstärkungsfasern mit derartig geringen Titern, d.h. mit derartig geringen Filamentzahlen, zu erhöhten Kosten insbesondere auch wegen des Einsatzes relativ hochpreisiger Ausgangsmaterialien führt. Andererseits ist aber die Verwendung grobtitrigerer Faserbündel, d.h. von Faserbündeln mit einer hohen Anzahl von Verstärkungsfaserfilamenten zwar kostengünstiger, jedoch sind, wie ausgeführt, hohe Faservolumenanteile damit nicht oder nur schwer realisierbar.

Es besteht daher ein Bedarf nach einem automatisierbaren Verfahren zur Herstellung eines Faservorformlings, mittels dessen eine kostengünstige Herstellung von Faservorformlingen unter Erzielung hoher Faservolumenanteile in den Faservorformlingen bzw. den daraus hergestellten Verbundwerkstoff-Bauteilen möglich ist.

Dokument JP2008254191 offenbart das Breitlegen und das Schneiden des Strangs in Verstärkungsfaserbündel definierter Länge.

Dokument US3,810,805 offenbart das Schneiden eines Gewebes in einer Längstrennvorrichtung entlang seiner Längserstreckung.

Daher ist es Aufgabe der vorliegenden Erfindung, ein derartiges Verfahren zum Herstellen eines Faservorformlings zur Verfügung zu stellen.

Die erfindungsgemäße Aufgabe wird durch ein Verfahren zum Herstellen eines Faservorformlings durch Ablegen von Verstärkungsfaserbündeln auf einer Oberfläche und/oder auf der Oberfläche abgelegten Verstärkungsfaserbündeln gelöst, wobei das Verfahren die Schritte umfasst:
- Zuführen mindestens eines endlosen bändchenförmigen Strangs von mit einem Binder versehenen Verstärkungsfasern von einer Vorlage auf einen Ablagekopf, wobei der mindestens eine Strang eine Strangbreite von mindestens 5 mm, und eine Konzentration des Binders im Bereich von 2 bis 70 Gew.-%, bezogen auf das Gewicht des bändchenförmigen Strangs, aufweist,
- Breitlegen des mindestens einen endlosen bändchenförmigen Strangs in einer auf dem Ablagekopf angeordneten Breitlegeeinheit und Fördern des mindestens einen Strangs in Förderrichtung mittels einer auf dem Ablagekopf angeordneten ersten Fördereinrichtung zu einer auf dem Ablagekopf angeordneten Längstrennvorrichtung,
- dabei Stabilisieren des mindestens einen Strangs in der Richtung quer zur Förderrichtung,
- Schneiden des mindestens einen Strangs in der Längstrennvorrichtung entlang seiner Längserstreckung mittels mindestens eines Trennelements in zwei oder mehr Teilstränge,
- Fördern der Teilstränge in Förderrichtung mittels einer auf dem Ablagekopf angeordneten zweiten Fördereinrichtung zu einer auf dem Ablagekopf angeordneten Ablängeinheit,
- Schneiden der Teilstränge mittels der Ablängeinheit in Verstärkungsfaserbündel definierter Länge und
- Ablegen der Verstärkungsfaserbündel auf einer Oberfläche und/oder auf der Oberfläche abgelegten Verstärkungsfaserbündeln und Fixieren der Verstärkungsfaserbündel auf der Oberfläche und/oder auf der Oberfläche abgelegten Verstärkungsfaserbündeln zur Ausbildung des Faservorformlings, wobei zwischen Ablagekopf und Oberfläche eine Relativbewegung zur belastungsgerechten Ablage der Verstärkungsfaserbündel auf der Oberfläche eingestellt wird.

Mittels des erfindungsgemäßen Verfahrens ist eine kostengünstige Herstellung von Faservorformlingen aus Verstärkungsfaserbündeln, d.h. aus Faserbündeln aus Verstärkungsfasern mit geringer Anzahl von Verstärkungsfaserfilamenten unter Realisierung von hohen Faservolumenanteilen im Faservorformling bzw. dem daraus hergestellten Faserverbundwerkstoff-Bauteil möglich. Hierbei können endlose bändchenförmige Stränge beispielsweise in Form kostengünstiger, grobtitriger Verstärkungsfasergarne als Ausgangsmaterial eingesetzt werden. Solche grobtitrigen Verstärkungsfasergarne können mittels der Längstrennvorrichtung zunächst in mehrere Teilstränge entlang der Erstreckung der die Garne aufbauenden Verstärkungsgarnfilamente getrennt werden, wobei die einzelnen Teilstränge dann eine gegenüber dem Ausgangsgarn reduzierte Anzahl von Filamenten aufweisen.

Bei den im erfindungsgemäßen Verfahren eingesetzten Verstärkungsfasern, die den mindestens einen bändchenförmigen Strang ausbilden, kommen vorzugsweise Kohlenstoff-, Glas- oder Aramidfasern oder Mischungen dieser Fasern untereinander oder mit thermoplastischen Fasern zum Einsatz. Besonders bevorzugt handelt es sich um Kohlenstofffasern.

In einer bevorzugten Ausführungsform ist der mindestens eine endlose bändchenförmige Strang von mit einem Binder versehenen Verstärkungsfasern ein Filamentgarn mit einer Filamentanzahl von mindestens 12.000 Filamenten, welches in eine bändchenförmige Gestalt breitgelegt ist. Besonders bevorzugt sind derartige Filamentgarne mit einer Filamentanzahl im Bereich von 24.000 bis 50.000 Filamenten. Im Falle, dass der bändchenförmige Strang von mit einem Binder versehenen Verstärkungsfasern ein Filamentgarn ist, liegt die Konzentration des Binders in einer bevorzugten Ausführung im Bereich von 2 bis 14 Gew.-% und in einer besonders bevorzugten Ausführung im Bereich von 3 bis 7 Gew.-%, bezogen auf das Gesamtgewicht des mit Binder versehenen Filamentgarns.

Bei dem Binder kann es sich dann um eine Faserpräparation handeln, wie sie üblicherweise auf die Filamente des Filamentgarns aufgetragen wird, um eine verbesserte Verarbeitbarkeit und einen guten Faserschluss zu erreichen, d.h. ein zumindest teilweises Verbinden der Filamente untereinander. Derartige Präparationen basieren häufig auf Epoxidharzen. Für das erfindungsgemäße Verfahren ist jedoch ein gegenüber den üblicherweise verwendeten Konzentrationen der Präparation erhöhter Gehalt erforderlich, der, wie ausgeführt, vorzugsweise im Bereich von 2 bis 14 Gew.-% und besonders bevorzugt im Bereich von 3 bis 7 Gew.-% vor, bezogen auf das Gesamtgewicht des mit Binder versehenen Filamentgarns, beträgt.

Als Binder kommen hierbei thermoplastische oder ungehärtete oder teilweise gehärtete duroplastische Polymere oder auch Polymerkompositionen aus diesen Polymeren in Frage. Geeignete thermoplastische Polymere sind beispielsweise Polyethylenimin, Polyetherketon, Polyetheretherketon, Polyphenylensulfid, Polysulfon, Polyethersulfon, Polyetherethersulfon, aromatische Polyhydroxyether, thermoplastische Polyurethanharze oder Mischungen dieser Polymere. Als ungehärtete oder teilweise gehärtete duroplastische Polymere kommen beispielsweise Epoxide, Isocyanate, Phenolharze oder ungesättigte Polyester in Frage. Dabei ist es von Vorteil, wenn der endlose bändchenförmige Strang von mit einem Binder versehenen Verstärkungsfasern ein Filamentgarn ist, das bei der Verarbeitungstemperatur im Bereich des Ablagekopfes, d.h. in der Regel bei Raumtemperatur nicht klebrig ist und beispielsweise von einer Spule abgewickelt werden kann. Bei erhöhten Temperaturen sollte der Binder bzw. sollten die mit dem Binder versehenen Verstärkungsfasern jedoch klebrig sein und zu einer guten Haftung der daraus hergestellten Faserbündel führen. Derartige Verstärkungsfasergarne bzw. Stränge von Verstärkungsfasern werden beispielsweise in der WO 2005/095080 beschrieben, auf deren Offenbarung sich an dieser Stelle ausdrücklich bezogen wird. Die dortigen Filamentgarne sind mit einem aus mehreren unterschiedlichen Epoxidharzen zusammengesetzten Binder infiltriert, wobei diese Epoxidharze sich hinsichtlich ihrer Eigenschaften wie Epoxidwert und Molekulargewicht sowie hinsichtlich ihrer Konzentration zueinander in definierter Weise unterscheiden.

In einer bevorzugten Ausführungsform des erfindungsgemäßen Verfahrens ist der mindestens eine Strang ein vorimprägniertes Filamentgarn und der Binder besteht aus einer ersten und einer zweiten Harzzusammensetzung, wobei die Filamente des Filamentgarns mit einer ersten Harzzusammensetzung imprägniert und über die erste Harzzusammensetzung zumindest teilweise verbunden sind, wobei die erste Harzzusammensetzung mindestens zwei Bisphenol A Epichlorhydrin-Harze H1 und H2 in einem Gewichtsverhältnis H1:H2 von 1,1 bis 1,4 enthält, wobei H1 einen Epoxidwert von 1850 bis 2400 mmol/kg, ein mittleres Molekulargewicht M_{N} von 800 bis 1000 g/Mol aufweist und bei Raumtemperatur fest ist und H2 einen Epoxidwert von 5000 bis 5600 mmol/kg, ein mittleres Molekulargewicht M_{N} von < 700 g/Mol aufweist und bei Raumtemperatur flüssig ist, und des Weiteren einen aromatischen Polyhydroxyether P1 enthält, welcher eine Säurezahl von 40 bis 55 mg KOH/g und ein mittleres Molekulargewicht M_{N} von 4000 bis 5000 g/mol aufweist, und wobei das vorimprägnierte Filamentgarn an seiner Außenseite eine zweite Harzzusammensetzung in Form von an den Filamenten anhaftenden Partikeln oder Tropfen aufweist, wobei die zweite Harzzusammensetzung bei Raumtemperatur fest ist, eine Schmelztemperatur im Bereich von 80 bis 150 °C aufweist und auf der Garnaußenseite in einer Konzentration von 0,5 bis 10 Gew.-%, bezogen auf das Gesamtgewicht des vorimprägnierten Filamentgarns, vorliegt, und wobei mindestens 50 % der Fläche der Garnaußenseite frei von der zweiten Harzzusammensetzung sind und das Garninnere frei von der zweiten Harzzusammensetzung ist. Derartige mit einem Binder vorimprägnierte Filamentgarne werden in der unveröffentlichten Patentanmeldung Aktenzeichen: EP 11175952.8 beschrieben, auf deren diesbezügliche Offenbarung sich hier ausdrücklich bezogen wird.

In einer weiteren bevorzugten Ausführungsform kann es sich bei dem mindestens einen Strang um ein Prepreg aus unidirektional in Erstreckungsrichtung des Prepregs und damit in Förderrichtung des Prepregs angeordneten Verstärkungsfasern handeln. Im Rahmen der vorliegenden Erfindung wird unter einem Prepreg ein Halbfabrikat von mit einem polymeren Matrixsystem imprägnierten Verstärkungsfasern verstanden. Dabei kann es sich um ein Garnprepreg ("tow prepreg") handeln, d.h. um ein einzelnes Garn, welches mit einem Matrixsystem imprägniert ist. Es kann sich jedoch auch um ein bahnförmiges Halbfabrikat handeln, welches aus nebeneinander parallel zueinander angeordneten und unidirektional ausgerichteten Verstärkungsfasern besteht, die mit einem Matrixsystem imprägniert sind. Im Falle der Verwendung von Prepregs ist dann das Matrixsystem der Binder.

Als Matrixsystem bzw. Binder kommen in diesen Fällen ebenfalls thermoplastische Polymere oder ungehärtete oder teilweise gehärtete duroplastische Polymere oder Polymerkompositionen in Frage, wobei auf die zuvor genannten Polymere zurückgegriffen werden kann. In dem Fall, dass der mindestens eine Strang von mit einem Binder versehenen Verstärkungsfasern ein Prepreg ist, ist bevorzugt, wenn der Binder, d.h. das Matrixsystem, in einer Konzentration im Bereich von 15 bis 70 Gew.-%, bezogen auf das Gewicht des Prepregs, vorliegt und im Falle, dass es sich bei den Verstärkungsfasern um Kohlenstofffasern handelt, besonders bevorzugt im Bereich von 20 bis 60 Gew.-%.

Der mindestens eine bändchenförmige Strang von mit einem Binder versehenen Verstärkungsfasern kann von einer Spule oder im Falle der Verwendung eines Prepregs von einer Rolle als Vorlage abgewickelt und dem Ablagekopf zugeführt werden. Vorzugsweise ist die Vorlage, d.h. die Spule oder Rolle, mit dem Ablagekopf fest verbunden, so dass bei Bewegungen des Ablagekopfes die Vorlage mitgeführt wird. Hierdurch lässt sich ein stabiler Lauf des mindestens einen Strangs erreichen.

Zur Verbesserung einer sicheren Positionierung des mindestens einen bändchenförmigen Strangs, zur Erhöhung seiner Breite und des Erzielung eines guten Ergebnisses der Längsschneideinrichtung wird der mindestens eine Strang über eine auf dem Ablagekopf angeordneten Breitlegeeinheit geführt, die in Förderrichtung des mindestens einen endlosen bändchenförmigen Strangs über den Ablegekopf gesehen vor der ersten Fördereinrichtung angeordnet ist. Als Breitlegeeinheit ist ein einzelner oder eine Anordnung mehrerer feststehender und/oder drehbar gelagerter Stäbe geeignet, über die die Fadenspannung im Strang erhöht werden kann. Die Oberfläche der Stäbe sollte vorteilhafterweise so beschaffen sein, dass ein Abrieb der über sie geführten Garnstränge gering gehalten wird. Hierfür kann auf bekannte Oberflächen und Materialien zurückgegriffen werden. Die Stäbe sind vorzugsweise so angeordnet, dass der mindestens eine endlose bändchenförmige Strang mit einem Umschlingungswinkel im Bereich von größer 20° um die Stäbe geführt wird.

Vorzugsweise weist der mindestens eine Strang aus mit einem Binder versehenen Verstärkungsfasern eine Strangbreite von mindestens 6 mm auf. Ebenso ist bevorzugt, wenn der mindestens eine Strang ein Verhältnis seiner Breite zu seiner Dicke von mindestens 20 aufweist.

Im Anschluss an die Breitlegeeinheit passiert der mindestens eine Strang die erste Fördereinrichtung, mittels derer eine definierte Fördergeschwindigkeit des mindestens einen Strangs eingestellt und durch die der mindestens eine Strang der Längstrennvorrichtung zugeführt wird.

Der mindestens eine Strang wird über geeignete Einrichtungen zur seitlichen Führung des mindestens einen Strangs von Verstärkungsfasern in der Richtung quer zur Förderrichtung stabilisiert, so dass er gerade und ohne seitliche Ablenkungen durch die einzelnen Förder- und Trennvorrichtungen geführt wird. Hierdurch lässt sich ein sauberer Schnitt in der Längstrennvorrichtung mit sauberen Schnittkanten erzielen, da der Schnitt zumindest weitgehend parallel zu den Filamenten des mindestens einen Strangs erfolgen kann. Bevorzugt sind hierzu Stäbe, Rollen, Walzen oder andere Führungseinrichtungen sowie gegebenenfalls die Fördereinrichtungen rechtwinklig zur Förderrichtung des mindestens einen bändchenförmigen Strangs sowie parallel zueinander ausgerichtet. Darüber hinaus können in einer bevorzugten Ausführungsform Stäbe, Rollen, Walzen und andere Führungselemente, über die der mindestens eine bändchenförmige Strang geführt wird, an den jeweiligen Kontaktstellen mit dem Strang ballig ausgebildet sein. Bevorzugt weist die Kontur der Führungselemente im Bereich der Balligkeit einen Radius im Bereich von 50 bis 600 mm auf.

Für den Längs- und den Querschneidprozess (Ablängprozess) ist es von Vorteil, wenn der mindestens eine Strang von Verstärkungsfasern unter Spannung durch die Ablegevorrichtung geführt wird und insbesondere zwischen der ersten und der zweiten Fördereinrichtung ein Spannungsaufbau im mindestens einen Strang von Verstärkungsfasern erfolgt. Hierdurch lässt sich ein sicheres Flachhalten und eine gute Spreizung des mindestens einen Strangs von Verstärkungsfasern sowie ein stabiler Lauf des mindestens einen Strangs von Verstärkungsfasern erreichen, was insbesondere ein gutes Schneidergebnis in der Längstrennvorrichtung begünstigt. Dies lässt sich beispielsweise dadurch erreichen, dass die Geschwindigkeiten der ersten und der zweiten Fördereinrichtung so eingstellt werden, dass die Geschwindigkeit der zweiten Fördereinrichtung höher ist als die der ersten Fördereinrichtung. Vorzugsweise wird der mindestens eine Strang der Längstrennvorrichtung unter einer Fadenzugkraft im Bereich von 40 bis 300 cN pro mm Strangbreite zugeführt.

Die von dem mindestens einen Strang durchlaufene erste und/oder zweite Fördereinrichtung besteht in einer vorteilhaften Ausführungsform aus einer oder mehreren angetriebenen Rollen oder Walzen, mittels derer der mindestens eine Strang transportiert wird. Dabei können die Rollen bzw. Walzen so zueinander angeordnet sein, dass in der Anwendung der mindestens eine Strang von Verstärkungsfasern die Rollen bzw. Walzen umschlingt. In einer weiteren bevorzugten Ausführungsform umfasst die erste und/oder zweite Fördereinrichtung ein angetriebenes und in seiner Geschwindigkeit steuerbares Walzenpaar mit einem zwischen den Walzen des Walzenpaars einstellbaren Walzenspalt, durch den infolge des durch das Walzenpaar ausgeübten Drucks der mindestens eine Strang von Verstärkungsfasern gefördert wird.

Des Weiteren kann in einer ebenfalls bevorzugten Ausführungsform die erste und/oder zweite Fördereinrichtung eine Gebläseeinrichtung umfassen, mittels derer der mindestens eine endlose bändchenförmige Strang von Verstärkungsfasern befördert wird. Hierbei ist die Gebläseeinrichtung mit einer regelbaren Luftzufuhr gekoppelt.

Mittels der Längstrennvorrichtung wird der mindestens eine Strang entlang seiner Längserstreckung in Teilstränge geschnitten. Die so erhaltenen Teilstränge weisen bevorzugt eine Breite im Bereich von 0,5 bis 5 mm und besonders bevorzugt im Bereich von 0,5 bis 3 mm auf. Mit aus solchen Teilsträngen hergestellten Faserbündeln lassen sich hohe Faservolumenanteile im Faservorformling bzw. den daraus hergestellten Faserverbundwerkstoff-Bauteilen erzielen.

Die Längstrennvorrichtung umfasst mindestens ein Trennelement zum Trennen des mindestens einen Strangs von Verstärkungsfasern entlang seiner Längserstreckung. Bei dem mindestens einen Trennelement der Längstrennvorrichtung kann es sich um mindestens eine Laserstrahl-, eine Luftstrahl oder eine Wasserstrahlanordnung handeln oder um ein mechanisches Trennelement z.B. in Gestalt mindestens eines feststehenden Elements, z.B. um ein feststehendes Messer, oder auch in Gestalt mindestens einer rotierenden Trennscheibe, die vorzugsweise angetrieben wird. Dabei kann der Antrieb regelbar und so ausgelegt sein, dass eine Differenzgeschwindigkeit zwischen der Umfangsgeschwindigkeit der mindestens einen Trennscheibe und der Fördergeschwindigkeit des die Längstrennvorrichtung durchlaufenden mindestens einen Strangs von Verstärkungsfasern eingestellt werden kann. Die Drehrichtung der mindestens einen rotierenden Trennscheibe kann in Förderrichtung des mindestens einen bändchenförmigen Strangs oder auch entgegengesetzt dazu sein. Im erfindungsgemäßen Verfahren hat sich als vorteilhaft herausgestellt, wenn die Umfangsgeschwindigkeit der mindestens einen Trennscheibe um 2 bis 15 % höher ist als die Fördergeschwindigkeit des die Längstrennvorrichtung durchlaufenden mindestens einen Strangs. Von besonderem Vorteil ist eine Umfangsgeschwindigkeit der mindestens einen Trennscheibe, die um 4 bis 10 % höher ist als die Fördergeschwindigkeit des mindestens einen Strangs.

In einer bevorzugten Ausführungsform werden im Falle, dass das mindestens eine Trennelement ein mechanisches Trennelement ist, der mindestens eine Strang und das mindestens eine Trennelement mittels eines kraftgesteuerten Niederhalters mit definierter Kraft gegeneinander gedrückt. Dabei kann z.B. die rotierende Trennscheibe mit einem kraftgesteuerten Niederhalter verbunden sein, mittels dessen die rotierende Trennscheibe mit definierter Kraft gegen den entlang seiner Längserstreckung zu trennenden mindestens einen Strang von Verstärkungsfasern angedrückt wird. Vorzugsweise wird der mindestens eine Strang durch den Niederhalter gegen das mindestens eine mechanische Trennelement gedrückt. Mittels eines solchen Niederhalters kann in der Anwendung in Fällen, bei denen der mindestens eine Strang von Verstärkungsfasern eine Drehung aufweist, beispielsweise eine Garndrehung im Fall, dass der Strang ein Garn ist, ein Trennen des Strangs im Bereich der Drehung quer zur Faserrichtung vermieden werden. Ein bereits teilweises Trennen des Strangs quer zur Faserrichtung kann zu einem Abreißen des Strangs und als Folge zu einer Unterbrechung des Schneid- und damit des Ablegeprozesses führen.

In einer vorteilhaften Ausgestaltung des Verfahrens kann der mindestens eine Strang von mit einem Binder versehenen Verstärkungsfasern in der Längstrennvorrichtung in mehr als zwei Teilstränge geschnitten werden. Auf diese Weise lässt sich die Anzahl der Filamente in den einzelnen Teilsträngen so weit reduzieren, dass Faserbündel mit genügend geringer Breite erhalten werden. Die Verwendung solcher Faserbündel mit geringerer Breite wiederum lassen sich höhere Faservolumenanteile in dem damit hergestellten Faservorformling bzw. im resultierenden Verbundwerkstoff-Bauteil realisieren. Die Anzahl der Trennelemente der Längstrennvorrichtung richtet sich dann nach der Anzahl der Teilstränge, die erhalten werden sollen.

Es ist ebenso eine bevorzugte Ausführungsform, wenn der mindestens eine Strang in Teilstränge unterschiedlicher Breite geschnitten wird. Das mindestens eine Trennelement kann also relativ zu den Einrichtungen zur seitlichen Führung des mindestens einen endlosen bändchenförmigen Strangs von Verstärkungsfasern so angeordnet sein, dass der mindestens eine Strang mittig oder außermittig in Teilstränge unterteilt wird. Ebenso können im Falle eines einzelnen Strangs von Verstärkungsfasern, der in drei oder mehr Teilstränge getrennt werden soll, die mehreren Trennelemente relativ zueinander und/oder relativ zu den Einrichtungen zur seitlichen Führung so angeordnet werden, dass unterschiedlich breite Teilstränge resultieren.

In einer bevorzugten Ausführungsform des erfindungsgemäßen Verfahrens werden mehrere endlose bändchenförmige Stränge von mit einem Binder versehenen Verstärkungsfasern vorgelegt und dem Ablagekopf bzw. den darauf angeordneten Einrichtungen wie unter anderem der Längstrennvorrichtung und der Ablängeinheit zugeführt. Dabei können die Stränge gleich oder unterschiedlich sein. Beispielsweise kann es sich bei allen der mehreren Stränge um Stränge von Kohlenstofffasern handeln. Es können jedoch auch beispielsweise Stränge von Kohlenstofffasern mit Strängen von Glasfasern kombiniert werden.

Im Falle der Zuführung mehrerer Stränge von mit einem Binder versehenen Verstärkungsfasern zum Ablagekopf sind dann mehrere Vorlagen vorhanden, z.B. in Form eines Spulengatters, und eine entsprechende Anzahl von Einrichtungen zur seitlichen Führung der einzelnen Stränge. Dabei können die mehreren Stränge so geführt werden, dass sie nebeneinander angeordnet werden, wobei die einzelnen Stränge zueinander beabstandet sein können oder auch sich berührend aneinander liegen können. Die Längstrennvorrichtung umfasst dann mehrere Trennelemente, deren Anzahl sich nach der Anzahl der Teilstränge richtet, die aus den nebeneinander angeordneten mehreren Strängen von Verstärkungsfasern hergestellt werden sollen. Beispielsweise weist die Längstrennvorrichtung vier Trennelemente auf, wenn zwei nebeneinander angeordnete bändchenförmige Garnstränge jeweils in drei Teilstränge geschnitten werden sollen.

In einer weiteren Ausführungsform können bei Vorlage mehrerer endloser bändchenförmiger Stränge von mit einem Binder versehenen Verstärkungsfasern, d.h. mehrerer Stränge von Verstärkungsfasern, diese so mittels geeigneter Führungseinrichtungen über die erste Fördereinrichtung der Längstrennvorrichtung zugeführt werden, dass sie übereinander angeordnet werden, d.h. aufeinander liegen. In diesem Fall können die bändchenförmigen Stränge zusammen von denselben Trennelementen in Längsrichtung geschnitten werden. Beispielsweise weist die Längstrennvorrichtung für den Fall, bei dem zwei bändchenförmige Garnstränge in jeweils drei Teilstränge geschnitten werden sollen, dann zwei Trennelemente auf.

Nach Schneiden des mindestens einen Strangs von Verstärkungsfasern in Teilstränge werden diese Teilstränge mittels der zweiten Fördereinrichtung der Ablängeinheit zugeführt. Mittels der Ablängeinheit werden dann die in der Längstrennvorrichtung erhaltenen Teilstränge quer zu ihrer Erstreckungsrichtung zu Faserbündeln definierter Länge, d.h. einer zuvor eingestellten Länge geschnitten, wobei die Länge der resultierenden Faserbündel von der Frequenz abhängt, mit der die Schnitte quer zur Erstreckungsrichtung der Teilstränge in Abhängigkeit von der Fördergeschwindigkeit durchgeführt werden, d.h. von der Frequenz des Querschneidens. In einer bevorzugten Ausführungsform ist die Ablängeinheit so mit den Fördereinrichtungen gekoppelt, dass bei Veränderung der Fördergeschwindigkeit die Frequenz des Querschneidens so verändert wird, dass die Länge der resultierenden Verstärkungsfaserbündel gleich bleibt. In einer weiteren bevorzugten Ausführungsform ist die Frequenz des Querschneidens unabhängig von der Fördergeschwindigkeit einstellbar, so dass bei gleichbleibender Fördergeschwindigkeit unterschiedlich lange Verstärkungsfaserbündel hergestellt werden können. Natürlich ist auch eine Kombination der Einstellmöglichkeiten von der Erfindung umfasst, bei der zum einen die Fördergeschwindigkeit als Stellgröße für die Frequenz des Querschneidens dient, jedoch bei eingestellter Fördergeschwindigkeit die Frequenz des Querschneidens variiert werden kann. Hierdurch kann die Länge der Faserbündel während der Durchführung des erfindungsgemäßen Verfahrens variiert und z.B. an Konturgegebenheiten des herzustellenden Faservorformlings angepasst werden. In einer bevorzugten Ausführungsform wird daher die Frequenz des Querschneidens über der Zeit zur Variation der Länge der Faserbündel verändert. Bevorzugt werden die Teilstränge so mittels der Ablängeinheit geschnitten, dass die resultierenden Faserbündel eine Länge im Bereich von 10 bis 100 mm aufweisen. Besonders bevorzugt ist eine Länge der Faserbündel im Bereich von 10 bis 75 mm.

Hinsichtlich der Ablängeinheit kann auf bekannte Aggregate und Verfahren zum Schneiden von Verstärkungsfasern quer zu ihrer Erstreckungsrichtung zurückgegriffen werden. Als solche Aggregate kommen beispielsweise Aggregate zum Wasser- oder zum Luftstrahlschneiden von Fasern, zum Schneiden von Fasern mittels Laserstrahlen, Aggregate mit z.B. pneumatisch vortreibbaren Schlagmessern quer zur Förderrichtung, Rotationsquerschneider mit Messerwalze und Gegenwalze oder auch Rotationsschneidmesser in Frage, deren Drehachse sich in Förderrichtung der Teilstränge oder in einem Winkel von bis zu 60°, bevorzugt von bis zu 20° dazu erstreckt. Letztere Rotationsschneidmesser werden beispielsweise in der DE 20 2010 017 556 U1 oder der EP-A-2 351 880 offenbart. In einer bevorzugten Ausführungsform werden die Teilstränge mittels eines Rotationsquerschneiders in Faserbündel abgelängt, bei dem die Messer gegen den zu schneidenden mindestens einen Strang von Verstärkungsfasern gedrückt werden, ohne dass ein wesentlicher Gegendruck auf der anderen Seite des Strangs ausgeübt wird. Diese Vorgehensweise führt bei spröden Verstärkungsfasern, wie z.B. bei Kohlenstofffasern oder bei Glasfasern, zu einem Sprödbruch an der Belastungsstelle und damit zu einem sauberen Ablängen des Strangs von Verstärkungsfasern. Derartige Aggregate werden z.B. in der EP-A-1 144 738, der EP-A-1 394 295, der EP-A-1 723 272 oder der WO 02/055770 beschrieben, auf deren diesbezüglichen Offenbarungsgehalt ausdrücklich Bezug genommen wird.

In einer bevorzugten Ausführungsform werden die erhaltenen Faserbündel mittels einer Einrichtung zum Abtransport der Faserbündel von der Ablängeinrichtung abtransportiert. Dies kann z.B. mittels eines kurzen Förderbandes erfolgen. Besonders bevorzugt werden die Faserbündel über den Düsenkanal eines mit Druckluft beaufschlagten Düsenkopfes von der Ablängeinheit abtransportiert. Vorzugsweise ist im Düsenkanal des Düsenkopfs eine Venturidüse zum Einbringen der Druckluft in den Düsenkanal angeordnet. Hierdurch können die Faserbündel zur Herstellung des Faservorformlings mit erhöhter Geschwindigkeit auf die Oberfläche und/oder die auf der Oberfläche abgelegten Faserbündel abgelegt, d.h. gesprüht werden.

Der Düsenkopf zum Abtransport der Faserbündel kann Mittel zum Einbringen von Matrixmaterial in den Düsenkanal aufweisen. In einer vorteilhaften Ausführungsform des Verfahrens kann darüber partikelförmiges Matrixmaterial in den Düsenkanal eingetragen werden, das zusammen mit den abgelängten Faserbündeln über den Düsenkopf ausgetragen und auf die Oberfläche und/oder die auf der Oberfläche abgelegten Faserbündel ausgetragen bzw. gesprüht werden. Die Mittel zum Einbringen von Matrixmaterial können z.B. eine Venturidüse sein, die in den Düsenkanal hineinragt und über die Matrixpartikel in den Düsenkanal eingetragen werden. Es kann sich jedoch auch um eine im Düsenkanal angeordnete Sprühdüse handeln, mittels derer flüssiges Matrixmaterial eingesprüht wird. Die Zuführung von Matrixmaterial kann von Vorteil sein, um beim Ablegen der mittels der Ablegevorrichtung hergestellten Faserbündel auf eine Oberfläche durch das Matrixmaterial ein besseres Aneinanderhaften und damit eine bessere Fixierung der Faserbündel untereinander und auf der Oberfläche zu bewirken. Gleichzeitig kann z.B. Matrixmaterial in der für die Herstellung eines Verbundwerkstoff-Bauteils erforderlichen Menge bereits bei der Herstellung des Faservorformlings zugeführt werden.

Bei der Durchführung des erfindungsgemäßen Verfahrens kann es im Hinblick auf ein besseres Aneinanderhaften und damit auf eine bessere Fixierung der Faserbündel untereinander und auf der Oberfläche von Vorteil sein, wenn die Faserbündel und das gegebenenfalls zugeführte partikel- oder tröpfchenförmige Matrixmaterial nach der Ablängeinheit und vor Ablegen oder beim Ablegen auf die Oberfläche und/oder auf die auf der Oberfläche abgelegten Faserbündel erhitzt werden. Hierdurch lässt sich der Binder, mit dem die Faserbündel versehen sind, und/oder das Matrixmaterial aktivieren, d.h. in einen klebrigen Zustand überführen, z.B. indem die Faserbündel auf eine Temperatur oberhalb des Schmelzpunktes des Binders erhitzt werden. Das Erhitzen kann beispielsweise durch Anblasen mit Heißluft oder durch eine erwärmte Umgebungsluft, durch Laserstrahlung oder durch Infrarotstrahlung bewirkt werden. Nach Auftreffen der Faserbündel auf die Oberfläche des zu erstellenden Faservorformlings und nach Abkühlung werden die Faserbündel über den dann wieder erhärteten Binder fixiert.

Gemäß einer weiteren bevorzugten Ausführungsform des Verfahrens kann partikel- oder tröpfchenförmiges Matrixmaterial auch getrennt von den Faserbündeln, jedoch gleichzeitig mit diesen auf die Oberfläche und/oder auf die auf der Oberfläche abgelegten Faserbündel gesprüht werden. Dies kann beispielsweise durch auf die Oberfläche gerichtetes Sprühen solcher Partikel oder Tröpfchen durch eine Hitzequelle wie z.B. eine Flamme oder ein Mikrowellen- oder Infrarotfeld erfolgen. Bevorzugt ist hier ein thermisches Spritzverfahren, wie es etwa in der WO 98/22644 oder in der US 2009/0014119 A1 beschrieben wird. Abhängig von dem Binder, mit dem der mindestens eine Stang von Verstärkungsfasern versehen ist, von den gegebenenfalls zugeführten Matrixmaterialien und von den beim Ablegen der Faserbündel vorherrschenden Temperaturen ist ein sich an das Ablegen der Faserbündel anschließender Abkühlschritt von Vorteil, um den Faservorformling zu stabilisieren.

Nach dem erfindungsgemäßen Verfahren werden die Verstärkungsfaserbündel auf einer Oberfläche und/oder auf der Oberfläche abgelegten Verstärkungsfaserbündeln abgelegt und auf der Oberfläche und/oder auf der Oberfläche abgelegten Verstärkungsfaserbündeln zur Ausbildung des Faservorformlings fixiert. Vorzugsweise weist die Oberfläche, d.h. die Ablagefläche, bereits eine Kontur auf, die an die Kontur des herzustellenden Faservorformlings bzw. des daraus herzustellenden Faserverbundwerkstoff-Bauteils angepasst ist.

Bei der Oberfläche oder Ablagefläche kann es sich um einen Löcher aufweisenden Schirm handeln, auf dem die Faserbündel gegebenenfalls unter gleichzeitigem Hinzufügen von Matrixmaterial abgelegt oder auf den sie gesprüht werden. Im Falle der Verwendung eines solchen Schirms kann eine Fixierung der Faserbündel dadurch zumindest unterstützt werden, dass Vakuum auf der Seite des Schirms angelegt wird, die der Seite des Schirms abgewandt ist, auf der die Faserbündel abgelegt werden. Auf diese Weise wird Luft durch den Schirm gesaugt, wodurch die Fixierung der Faserbündel erreicht werden kann. Die Oberfläche kann auch mit einem zuvor aufgebrachten und während des Ablegens klebrigen Binder- oder Matrixmaterial versehen werden, so dass dadurch für eine Haftung für die Faserbündel gesorgt wird. Die Haftung kann auch bei einem gleichzeitigen Hinzufügen von Matrixmaterial zusammen mit den Faserbündeln durch dieses Matrixmaterial bewirkt werden.

Für die Herstellung von Faserverbundwerkstoff-Bauteilen mit hohen Faservolumenanteilen ist es von Vorteil, wenn sich im erfindungsgemäßen Verfahren an den Schritt des Ablegens der Verstärkungsfaserbündel ein Kompaktierungsschritt anschließt, in dem die abgelegten Verstärkungsfaserbündel zur Erzielung eines höheren Faservolumenanteils verdichtet werden. Dieser Kompaktierungsschritt kann so ausgeführt werden, dass der nach Ablegen der Faserbündel erhaltene Vorformling in einer Form vorzugsweise bei erhöhter Temperatur einem erhöhten Druck z.B. in einer Presse ausgesetzt wird. Ebenso kann der nach Ablegen der Faserbündel erhaltenen Vorformling in einen Vakuumsack gepackt werden und die Kompaktierung dann unter Anlegen von Vakuum und bei erhöhter Temperatur erfolgen.

In einer bevorzugten Ausführungsform des Verfahrens zur Herstellung eines Faservorformlings ist der Ablagekopf mit einer steuerbaren Positionierungseinheit verbunden, mittels derer der Ablagekopf relativ zur Oberfläche bewegt wird. In einer Ausgestaltung kann der Ablagekopf über einen auf einem Maschinensockel befindlichen Knick-Arm Roboter verbunden und mittels des Knick-Arms und eines vom Knick-Arm gehaltenen Robotergelenks in mindestens zwei Achsen relativ zur Oberfläche positionierbar sein. In einer weiteren Ausgestaltung kann der Ablagekopf über einen Gelenkkopf in einem Portalgerüst befestigt und um mindestens zwei Achsen relativ zur Oberfläche positionierbar sein. Vorzugsweise ist der Ablagekopf in mindestens 6 und besonders bevorzugt um mindestens 9 Achsen positionierbar.

In einer weiteren Ausführungsform ist die Oberfläche, auf der die Faserbündel abgelegt werden, feststehend und die Relativbewegung zwischen Ablagekopf und Oberfläche wird durch eine Bewegung bzw. Positionierung des Ablagekopfes bewirkt. Alternativ kann auch die Oberfläche, auf der die Faserbündel abgelegt werden, z.B. über einen Knick-Arm Roboter bewegt werden und der Ablagekopf feststehen. Natürlich sind auch Mischformen vom vorliegenden Verfahren umfasst, bei denen z.B. die Oberfläche über einen Knick-Arm Roboter um beispielsweise 6 Achsen bewegt wird und der Ablagekopf ebenfalls positionierbar ist, beispielsweise um 3 Achsen.

Aus mittels des erfindungsgemäßen Verfahrens hergestellten Faservorformlingen lassen sich Verbundwerkstoff-Bauteile herstellen, die sich durch einen hohen Faservolumenanteil und damit hohen spezifischen mechanischen Eigenschaften wie z.B. hohen Festigkeiten auszeichnen. Die Erfindung betrifft daher auch ein Verfahren zum Herstellen eines Faserverbundwerkstoff-Bauteils unter Verwendung eines Faservorformlings, welcher nach dem erfindungsgemäßen Verfahren zum Herstellen eines Faservorformlings hergestellt wurde, umfassend die Schritte:
- Einbringen des nach dem erfindungsgemäßen Verfahren hergestellten Faservorformlings in eine formgebende Vorrichtung,
- Beaufschlagen des Faservorformlings mit Druck und/oder Vakuum und/oder erhöhter Temperatur zur Ausbildung des Faserverbundwerkstoff-Bauteils,
- Abkühlen des Faserverbundwerkstoff-Bauteils,
- Entnehmen des Faserverbundwerkstoff-Bauteils aus der formgebenden Vorrichtung.

Abhängig von dem im verwendeten Faservorformling vorliegenden Gehalt an Matrixmaterial sowie von der Art des Matrixmaterials ergeben sich unterschiedliche Ausführungsformen des Verfahrens zur Herstellung des Verbundwerkstoff-Bauteils. So kann ein Verbundwerkstoff-Bauteil über die zuvor genannten Verfahrensschritte durch direktes Verpressen hergestellt werden, ohne dass die Zuführung weiteren Matrixmaterials erforderlich ist, wenn der eingesetzte Faservorformling nach dem erfindungsgemäßen Verfahren unter Verwendung eines Prepregs als mindestens einem Strang von mit einem Binder versehenen Verstärkungsfasern hergestellt wurde und das Prepreg einen Matrix- bzw. Bindergehalt oberhalb von ca. 25 Gew.-% aufwies. Ebenso ist beispielweise die Herstellung des Verbundwerkstoff-Bauteils durch direktes Verpressen möglich, wenn bei der Herstellung des Faservorformlings zwar von bändchenförmigen Strängen von mit einem Binder versehenen Verstärkungsfasern ausgegangen wurde, bei denen die Konzentration des Binders vergleichsweise gering und für die Herstellung eines Bauteils mit kontinuierlicher Matrixphase nicht ausreichend war, jedoch vor Ablegen der Faserbündel oder beim Ablegen der Faserbündel zusätzliches Matrixmaterial zugeführt wurde.

Die Zeit für das Verpressen unter Druck und/oder Vakuum und unter erhöhter Temperatur hängt insbesondere von der Art des Matrixmaterials ab. Handelt es sich bei dem Matrixmaterial um ein thermoplastisches Polymer oder eine Mischung thermoplastischer Polymerer, können die Zeiten für das Verpressen relativ kurz gehalten werden. Bei Bindern und/oder Matrixmaterialien auf Basis ungehärteter oder teilweise gehärteter duroplastischer Polymerer ist die erforderliche Zeit für das Verpressen abhängig von den Zeiten, die zur Aushärten der Matrix benötigt werden.

Im Falle, dass in dem Verfahren zur Herstellung eines Verbundwerkstoff-Bauteils ein Faservorformling eingesetzt wird, bei dem die Faserbündel einen nur relativ geringen Bindergehalt, beispielsweise im Bereich von 2 bis 14 Gew.-%, bezogen auf das mit Binder versehene Verstärkungsgarn, aufweisen und der Binder z.B. auf ungehärteten oder teilweise gehärteten duroplastischen Polymeren bzw. Harzen basiert, kann nach den einleitend erwähnten Verfahren zur Infusion oder Injektion von Matrixmaterial für die Herstellung des Verbundwerkstoff-Bauteils noch benötigtes Matrixmaterial in die formgebende Vorrichtung eingebracht werden, bevor dann ein Verpressen unter Druck und/oder Vakuum und unter erhöhter Temperatur zum Bauteil erfolgt.

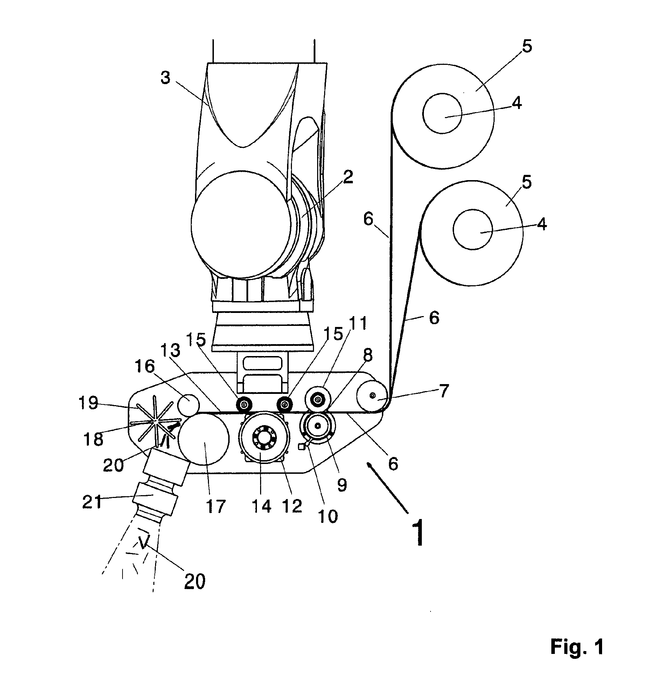

Zur Durchführung des erfindungsgemäßen Verfahrens ist eine Ablegevorrichtung bestens geeignet, wie sie nachfolgend anhand der schematischen Darstellung in Figur 1 erläutert werden soll:

Die erfindungsgemäße Ablegevorrichtung soll nachfolgend anhand der schematischen Darstellungen in den Figuren erläutert werden. Es zeigen:
- Figur 1:: Seitenansicht eines Segments der Ablegevorrichtung mit Ablagekopf.
- Figur 2:: Isometrische Darstellung des Segments der Ablegevorrichtung aus Figur 1.
- Figur 3:: Ablegevorrichtung mit Knick-Arm Roboter

Figur 1 zeigt eine schematische Darstellung eines Segments einer Ablegevorrichtung, bei dem der Ablagekopf 1 über ein Gelenk 2 mit einer steuerbaren Positionierungseinheit 3 verbunden ist. Mit dem Ablagekopf 1 sind vorliegend zwei Vorlagen 4 für Spulen 5 als Mittel zur Bereitstellung der bändchenförmigen Stränge 6 von mit einem Binder versehenen Verstärkungsfasern verbunden, die vorzugsweise mittels Steuermotoren angetriebenen werden. Die Verbindung zwischen Ablagekopf 1 und Vorlagen kann über geeignete Halterungen erfolgen (hier nicht dargestellt).

Von den auf den Vorlagen befindlichen Spulen 5 werden bändchenförmige Stränge 6 von mit einem Binder versehenen Verstärkungsfasern abgewickelt und um eine Breitlegewalze 7 geführt, die vorzugsweise ballig ausgeführt ist. Mittels der Breitlegewalze 7 werden die Stränge 6 breitgelegt und gegebenenfalls gespreizt. Über die ballige Ausführung der Breitlegewalze 7 kann gleichzeitig eine seitliche Führung der Stränge 6 bewirkt werden.

Von der Breitlegewalze 7 werden die Stränge 6 einer ersten Fördereinrichtung 8 zugeführt, die in der Ablegevorrichtung in Figur 1 aus einem angetriebenen Walzenpaar besteht. Hierbei wird die Unterwalze 9 mittels einer Spannungsvorrichtung 10 gegen die mit einer Gummierung versehene Oberwalze 11 gedrückt, so dass eine Förderung der Stränge 6 ohne Schlupf erfolgen kann. Nach Durchlaufen der ersten Fördereinrichtung 8 werden die Stränge 6 der Längstrennvorrichtung 12 zugeführt, in der die Stränge 6 längs ihrer Erstreckungsrichtung in Teilstränge 13 geschnitten werden. Hierzu dient eine Anordnung mehrerer rotierender Trennscheiben 14, gegen die die zu trennenden Stränge 6 mittels zweier kraftgesteuerter Niederhalterollen 15 mit definierter Kraft gedrückt werden. Die in der Längstrennvorrichtung 12 erhaltenen Teilstränge 13 werden der ebenfalls als angetriebenes Walzenpaar ausgeführten zweiten Fördereinrichtung 16 zugeführt. Durch Einstellen einer Geschwindigkeitsdifferenz zwischen zweiter Fördereinrichtung 16 und erster Fördereinrichtung 8, bei der die Fördergeschwindigkeit der zweiten Fördereinrichtung 16 geringfügig höher eingestellt wird als die der ersten Fördereinrichtung 8, lässt sich eine definierte Spannung auf die Stränge 6 und die Teilstränge 13 aufbringen, wodurch ein verbessertes Schneidergebnis in der Längstrennvorrichtung 12 erhalten wird.

Die Unterwalze 17 der zweiten Fördereinrichtung 16 dient gleichzeitig als Gegenwalze der im vorliegenden Beispiel als Rotationsquerschneider ausgeführten Ablängeinheit 18, umfassend Messerwalze 19 und Gegenwalze 17. In der Ablängeinheit 18 werden die Teilstränge 13 zu Verstärkungsfaserbündeln bzw. Faserbündeln 20 mit definierter Länge geschnitten. Die abgelängten Faserbündel 20 werden von der Ablängeinheit vom Düsenkopf 21 aufgenommen und über den mit Druckluft beaufschlagten Düsenkanal des Düsenkopfes 21 mit erhöhter Geschwindigkeit auf eine Oberfläche zur Herstellung eines Faservorformlings gesprüht.

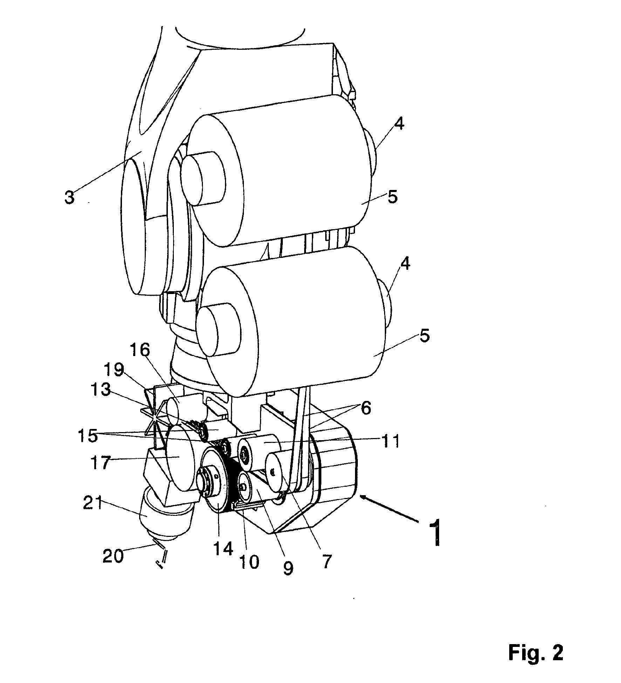

Figur 2 zeigt zur Verdeutlichung der räumlichen Anordnung insbesondere der Elemente des Ablagekopfes das in Figur 1 dargestellte Segment einer Ablegevorrichtung in perspektivischer Darstellung, wobei gleiche Bezugszeichen in den Figuren sich auf gleiche Elemente der Vorrichtung beziehen.

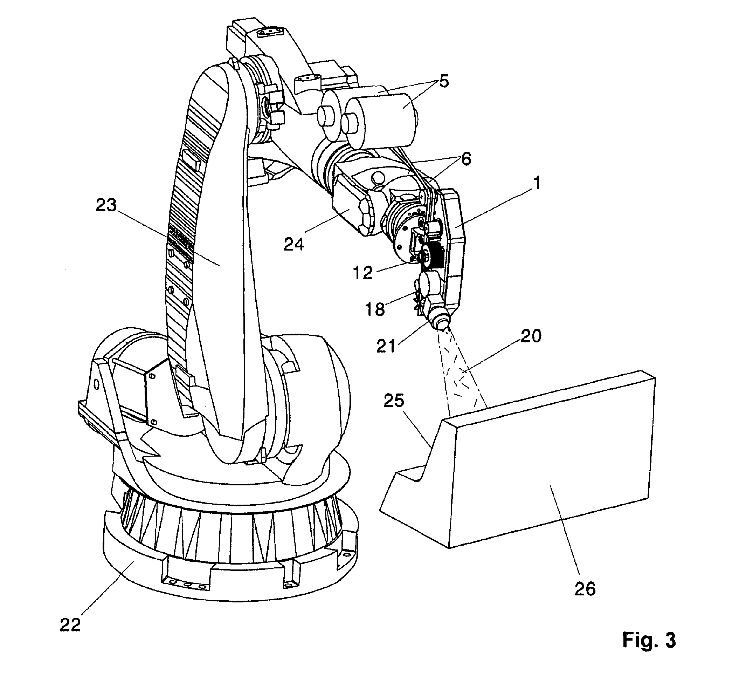

Figur 3 zeigt eine Ausführungsform der im erfindungsgemäßen Verfahren einsetzbaren Vorrichtung mit einem auf einem Maschinensockel 22 befindlichen Knick-Arm Roboter 23, an dessen Ende über ein Gelenk 24 der Ablagekopf 1 montiert ist und über den der Ablagekopf in mehreren Achsen relativ zur Oberfläche 25 eines zur Herstellung eines Faservorformlings eingesetzten Formkörpers bewegt werden kann. Hierdurch können die auf dem Ablagekopf 1 mittels der Längstrennvorrichtung 12 und der Ablängeinheit 18 erhaltenen und über den Düsenkopf 21 ausgetragenen Faserbündel 20 entsprechend den Erfordernissen der Struktur des herzustellenden Faservorformlings bzw. des daraus herzustellenden Verbundwerkstoff-Bauteils in definierten Bahnen auf die Oberfläche 25 gesprüht werden.

## Patentansprüche

1. Verfahren zum Herstellen eines Faservorformlings durch Ablegen von Verstärkungsfaserbündeln auf einer Oberfläche und/oder auf der Oberfläche abgelegten Verstärkungsfaserbündeln, umfassend die Schritte:
- Zuführen mindestens eines endlosen bändchenförmigen Strangs von mit einem Binder versehenen Verstärkungsfasern von einer Vorlage auf einen Ablagekopf, wobei der mindestens eine Strang eine Strangbreite von mindestens 5 mm und eine Konzentration des Binders im Bereich von 2 bis 70 Gew.-%, bezogen auf das Gewicht des bändchenförmigen Strangs, aufweist,
- Breitlegen des mindestens einen endlosen bändchenförmigen Strangs in einer auf dem Ablagekopf angeordneten Breitlegeeinheit und Fördern des mindestens einen Strangs in Förderrichtung mittels einer auf dem Ablagekopf angeordneten ersten Fördereinrichtung zu einer auf dem Ablagekopf angeordneten Längstrennvorrichtung,
- dabei Stabilisieren des mindestens einen Strangs in der Richtung quer zur Förderrichtung,
- Schneiden des mindestens einen Strangs in der Längstrennvorrichtung entlang seiner Längserstreckung mittels mindestens eines Trennelements in zwei oder mehr Teilstränge,
- Fördern der Teilstränge in Förderrichtung mittels einer auf dem Ablagekopf angeordneten zweiten Fördereinrichtung zu einer auf dem Ablagekopf angeordneten Ablängeinheit,
- Schneiden der Teilstränge mittels der Ablängeinheit in Verstärkungsfaserbündel definierter Länge und
- Ablegen der Verstärkungsfaserbündel auf einer Oberfläche und/oder auf der Oberfläche abgelegten Verstärkungsfaserbündeln und Fixieren der Verstärkungsfaserbündel auf der Oberfläche und/oder auf der Oberfläche abgelegten Verstärkungsfaserbündeln zur Ausbildung des Faservorformlings, wobei zwischen Ablagekopf und Oberfläche eine Relativbewegung zur belastungsgerechten Ablage der Verstärkungsfaserbündel auf der Oberfläche eingestellt wird.

2. Verfahren zum Herstellen eines Faservorformlings nach Anspruch 1, **dadurch gekennzeichnet, dass** der mindestens eine Strang ein Filamentgarn mit einer Filamentanzahl von mindestens 12.000 Filamenten ist.

3. Verfahren zum Herstellen eines Faservorformlings nach Anspruch 1 oder 2, **dadurch gekennzeichnet, dass** der mindestens eine Strang ein vorimprägniertes Filamentgarn ist und der Binder aus einer ersten und einer zweiten Harzzusammensetzung besteht, wobei die Filamente des Filamentgarns mit einer ersten Harzzusammensetzung imprägniert und über die erste Harzzusammensetzung zumindest teilweise verbunden sind, wobei die erste Harzzusammensetzung mindestens zwei Bisphenol A Epichlorhydrin-Harze H1 und H2 in einem Gewichtsverhältnis H1:H2 von 1,1 bis 1,4 enthält, wobei H1 einen Epoxidwert von 1850 bis 2400 mmol/kg, ein mittleres Molekulargewicht MN von 800 bis 1000 g/Mol aufweist und bei Raumtemperatur fest ist und H2 einen Epoxidwert von 5000 bis 5600 mmol/kg, ein mittleres Molekulargewicht MN von < 700 g/Mol aufweist und bei Raumtemperatur flüssig ist, und des Weiteren einen aromatischen Polyhydroxyether P1 enthält, welcher eine Säurezahl von 40 bis 55 mg KOH/g und ein mittleres Molekulargewicht MN von 4000 bis 5000 g/mol aufweist, und wobei das vorimprägnierte Filamentgarn an seiner Außenseite eine zweite Harzzusammensetzung in Form von an den Filamenten anhaftenden Partikeln oder Tropfen aufweist, wobei die zweite Harzzusammensetzung bei Raumtemperatur fest ist, eine Schmelztemperatur im Bereich von 80 bis 150 °C aufweist und auf der Garnaußenseite in einer Konzentration von 0,5 bis 10 Gew.-%, bezogen auf das Gesamtgewicht des vorimprägnierten Filamentgarns, vorliegt, und wobei mindestens 50 % der Fläche der Garnaußenseite frei von der zweiten Harzzusammensetzung sind und das Garninnere frei von der zweiten Harzzusammensetzung ist.

4. Verfahren zum Herstellen eines Faservorformlings nach Anspruch 2 oder 3, **dadurch gekennzeichnet, dass** der Binder in einer Konzentration, bezogen auf das Gesamtgewicht des mit Binder versehenen Filamentgarns, im Bereich von 2 bis 14 Gew.-% vorliegt.

5. Verfahren zum Herstellen eines Faservorformlings nach Anspruch 1, **dadurch gekennzeichnet, dass** der mindestens eine Strang ein Prepreg mit unidirektional in Erstreckungsrichtung des Strangs angeordneten Verstärkungsfasern ist.

6. Verfahren zum Herstellen eines Faservorformlings nach Anspruch 5, **dadurch gekennzeichnet, dass** der Binder in einer Konzentration, bezogen auf das Flächengewicht des Prepregs, im Bereich von 15 bis 70 Gew.-% liegt.

7. Verfahren zum Herstellen eines Faservorformlings nach einem oder mehreren der Ansprüche 1 bis 6, **dadurch gekennzeichnet, dass** der mindestens eine Strang in der Längstrennvorrichtung in mehr als zwei Teilstränge geschnitten wird.

8. Verfahren zum Herstellen eines Faservorformlings nach einem oder mehreren der Ansprüche 1 bis 7, **dadurch gekennzeichnet, dass** der mindestens eine Strang ein Verhältnis seiner Breite zu seiner Dicke von mindestens 20 aufweist.

9. Verfahren zum Herstellen eines Faservorformlings nach einem oder mehreren der Ansprüche 1 bis 8, **dadurch gekennzeichnet, dass** die Breite der Teilbündel im Bereich von 0,5 bis 5 mm liegt.

10. Verfahren zum Herstellen eines Faservorformlings nach einem oder mehreren der Ansprüche 1 bis 9, **dadurch gekennzeichnet, dass** die mittels der Ablängeinheit geschnittenen Faserbündel eine Länge im Bereich von 10 bis 100 mm aufweisen.

11. Verfahren zum Herstellen eines Faservorformlings nach einem oder mehreren der Ansprüche 1 bis 10, **dadurch gekennzeichnet, dass** mehrere Stränge von mit einem Binder versehenen Verstärkungsfasern dem Ablagekopf zugeführt werden, wobei die mehreren Stränge gleich oder unterschiedlich sein können.

12. Verfahren zum Herstellen eines Faservorformlings nach einem oder mehreren der Ansprüche 1 bis 11, **dadurch gekennzeichnet, dass** der Ablagekopf mit einer steuerbaren Positionierungseinheit verbunden ist, mittels derer der Ablagekopf relativ zur Oberfläche bewegt wird.

13. Verfahren zum Herstellen eines Faservorformlings nach einem oder mehreren der Ansprüche 1 bis 12, **dadurch gekennzeichnet, dass** die Faserbündel nach der Ablängeinheit und vor Ablegen auf der Oberfläche und/oder auf die auf der Oberfläche abgelegten Faserbündeln erhitzt werden.

14. Verfahren zum Herstellen eines Faservorformlings nach einem oder mehreren der Ansprüche 1 bis 13, **dadurch gekennzeichnet, dass** die Faserbündel über den Düsenkanal eines mit Druckluft beaufschlagten Düsenkopfs von der Ablängeinheit abtransportiert werden.

15. Verfahren zum Herstellen eines Faservorformlings nach einem oder mehreren der Ansprüche 1 bis 14, **dadurch gekennzeichnet, dass** zusammen mit den Faserbündeln partikel- oder tröpfchenförmiges Matrixmaterial auf die Oberfläche und/oder die auf der Oberfläche abgelegten Faserbündeln gesprüht wird.

16. Verfahren zum Herstellen eines Faservorformlings nach Anspruch 15, **dadurch gekennzeichnet, dass** in den Düsenkanal partikelförmiges Matrixmaterial eingetragen wird, das zusammen mit den Faserbündeln auf die Oberfläche und/oder die auf der Oberfläche abgelegten Faserbündeln gesprüht wird.

17. Verfahren zum Herstellen eines Faservorformlings nach einem oder mehreren der Ansprüche 1 bis 16, **dadurch gekennzeichnet, dass** sich an den Schritt des Ablegens der Verstärkungsfaserbündel ein Kompaktierungsschritt anschließt, in dem die abgelegten Verstärkungsfaserbündel zur Erzielung eines höheren Faservolumenanteils verdichtet werden.

18. Verfahren zum Herstellen eines Faserverbundwerkstoffbauteils unter Verwendung eines nach einem oder mehreren der Ansprüche 1 bis 17 hergestellten Faservorformlings, umfassend die Schritte:
- Einbringen des Faservorformlings in eine formgebende Vorrichtung,
- Beaufschlagen des Faservorformlings mit Druck oder Vakuum und/oder erhöhter Temperatur zur Ausbildung des Faserverbundwerkstoffbauteils,
- Abkühlen des Faserverbundwerkstoffbauteils,
- Entnehmen des Faserverbundwerkstoffbauteils aus der formgebenden Vorrichtung.

## Claims

1. Method for producing a fiber preform by deposition of reinforcing fiber bundles on a surface and/or on reinforcing fiber bundles deposited on the surface, comprising the steps:
- Supplying at least one continuous, ribbon-shaped strand of reinforcing fibers provided with a binder from a supply device to a deposition head, wherein the at least one strand has a width of at least 5 mm and a concentration of the binder in the range of 2 to 70 wt.% relative to the weight of the ribbon-shaped strand,
- Spreading the at least one continuous, ribbon-shaped strand in a spreader unit arranged on the deposition head and conveying the at least one strand in the conveying direction by means of a first conveying device arranged on the deposition head to a longitudinal splitting device arranged on the deposition head,
- Stabilizing thereby the at least one strand in the direction transverse to the conveying direction,
- Cutting the at least one strand in the longitudinal splitting device along the longitudinal extension thereof into two or more partial strands by means of at least one splitting element,
- Conveying the partial strands in the conveying direction by means of a second conveying device arranged on the deposition head to a cut-to-length unit arranged on the deposition head,
- Cutting the partial strands by means of the cut-to-length unit into reinforcing fiber bundles of defined length, and
- Depositing the reinforcing fiber bundles on a surface and/or on reinforcing fiber bundles deposited on the surface and fixing the reinforcing fiber bundles on the surface and/or on reinforcing fiber bundles deposited on the surface to form the fiber preform, wherein a relative movement between the deposition head and the surface is adjusted to provide load-appropriate deposition of the reinforcing fiber bundles on the surface.

2. Method for producing a fiber preform according to Claim 1, **characterized in that** the at least one strand is a filament yarn with a filament count of at least 12,000 filaments.

3. Method for producing a fiber preform according to Claim 1 or 2, **characterized in that** the at least one strand is a pre-impregnated filament yarn and the binder consists of a first and second resin composition, wherein the filaments of the filament yarn are impregnated with a first resin composition and are connected at least partially via the first resin composition, wherein the first resin composition contains at least two bisphenol A epichlorohydrin resins H1 and H2 in a weight ratio H1:H2 of 1.1 to 1.4, wherein H1 has an epoxy value of 1850 to 2400 mmol/kg, an average molecular weight M_{N} of 800 to 1000 g/mol, and is solid at room temperature, and H2 has an epoxy value of 5000 to 5600 mmol/kg, an average molecular weight M_{N} of < 700 g/mol, and is liquid at room temperature, and additionally contains an aromatic polyhydroxyether P1, which has an acid value of 40 to 55 mg KOH/g and an average molecular weight M_{N} of 4000 to 5000 g/mol, and wherein the pre-impregnated filament yarn has a second resin composition on the outside thereof in the form of particles or drops adhering to the filaments, wherein the second resin composition is solid at room temperature, has a melting temperature in the range from 80 to 150°C and is present on the outside of the yarn in a concentration of 0.5 to 10 wt.% relative to the total weight of the pre-impregnated filament yarn, and wherein at least 50% of the surface area of the outside of the yarn is free of the second resin composition and the yarn interior is free of the second resin composition.

4. Method for producing a fiber preform according to Claim 2 or 3, **characterized in that** the binder is present in a concentration in the range from 2 to 14 wt.% relative to the total weight of the filament yarn provided with a binder.

5. Method for producing a fiber preform according to Claim 1, **characterized in that** the at least one strand is a prepreg with reinforcing fibers arranged unidirectionally in the extension direction of the strand.

6. Method for producing a fiber preform according to Claim 5, **characterized in that** the binder is in a concentration in the range from 15 to 70 wt.% relative to the mass per unit area of the prepreg.

7. Method for producing a fiber preform according to one or more of Claims 1 to 6, **characterized in that** the at least one strand is cut in the longitudinal direction into more than two partial strands.

8. Method for producing a fiber preform according to one or more of Claims 1 to 7, **characterized in that** the at least one strand has a ratio of width to thickness of at least 20.

9. Method for producing a fiber preform according to one or more of Claims 1 to 8, **characterized in that** the width of the partial bundles lies in the range from 0.5 to 5 mm.

10. Method for producing a fiber preform according to one or more of Claims 1 to 9, **characterized in that** the fiber bundles cut by means of the cut-to-length unit have a length in the range from 10 to 100 mm.

11. Method for producing a fiber preform according to one or more of Claims 1 to 10, **characterized in that** multiple strands of reinforcing fibers provided with a binder are fed to the deposition head, wherein the multiple strands can be the same or different.

12. Method for producing a fiber preform according to one or more of Claims 1 to 11, **characterized in that** the deposition head is connected to a controllable positioning unit, by means of which the deposition head is moved relative to the surface.

13. Method for producing a fiber preform according to one or more of Claims 1 to 12, **characterized in that** the fiber bundles are heated after the cut-to-length unit and prior to deposition on the surface and/or on the fiber bundles deposited on the surface.

14. Method for producing a fiber preform according to one or more of Claims 1 to 13, **characterized in that** the fiber bundles are transported away from the cut-to-length unit via the nozzle channel of a nozzle head pressurized with compressed air.

15. Method for producing a fiber preform according to one or more of Claims 1 to 14, **characterized in that** particle or droplet shaped matrix material is sprayed together with the fiber bundles onto the surface and/or the fiber bundles deposited on the surface.

16. Method for producing a fiber preform according to Claim 15, **characterized in that** particle-shaped matrix material is introduced into the nozzle channel, which material is sprayed together with the fiber bundles onto the surface and/or the fiber bundles deposited on the surface.

17. Method for producing a fiber preform according to one or more of Claims 1 to 16, **characterized in that** a compacting step follows the step of depositing the reinforcing fiber bundles, in which compacting step the deposited reinforcing fiber bundles are compacted to achieve a higher fiber volume percentage.

18. Method for producing a fiber composite component using a fiber preform produced according to one or more of Claims 1 to 17, comprising the steps:
- Introduction of the fiber preform into a shaping device,
- Exposing the fiber preform to pressure or vacuum and/or increased temperature to form the fiber composite component,
- Cooling the fiber composite component,
- Removing the fiber composite component from the shaping device.

## Revendications

1. Procédé de fabrication d'une préforme de fibres par dépôt de faisceaux de fibres de renforcement sur une surface et/ou sur des faisceaux de fibres de renforcement déposées sur la surface, comprenant les opérations consistant à :
- Amener sur une tête de dépôt au moins un brin continu en forme de bandelette de fibres de renforcement dotées d'un liant provenant d'une réserve, le brin, au nombre du moins un, présentant une largeur de brin d'au moins 5 mm et une concentration du liant se situant dans la plage comprise entre 2 % en poids à 70 % en poids par rapport au poids du brin en forme de bandelette,
- Dépôt à plat du brin continu, au nombre du moins un, en forme de bandelette dans un ensemble de dépôt à plat disposé sur la tête de dépôt et transport dans la direction de transport du brin, au nombre du moins un, au moyen d'un premier dispositif de transport placé sur la tête de dépôt jusqu'à un dispositif de séparation dans le sens longitudinal disposé sur la tête de dépôt,
- puis stabilisation du brin, au nombre du moins un, transversalement à la direction de transport,
- Découpe du brin, au nombre du moins un, dans le dispositif de séparation dans le sens longitudinal sur son étendue dans le sens longitudinal au moyen d'au moins un élément de séparation en deux ou en plusieurs brins partiels,
- Transport des brins partiels dans la direction de transport au moyen d'un deuxième dispositif de transport disposé sur la tête de dépôt jusqu'à un ensemble de mise à longueur disposé sur la tête de dépôt,
- Découpe des brins partiels au moyen de l'ensemble de mise à longueur en faisceaux de fibres de renforcement de longueur définie et
- Dépôt des faisceaux de fibres de renforcement sur une surface et/ou sur des faisceaux de fibres de renforcement déposés sur la surface et fixation des faisceaux de fibres de renforcement sur la surface et/ou sur des faisceaux de fibres de renforcement déposés sur la surface en vue de la formation de la préforme de fibres, un mouvement relatif entre la tête de dépôt et la surface étant établi en vue d'un dépôt aligné sous contrainte des faisceaux de fibres de renforcement sur la surface.

2. Procédé de fabrication d'une préforme de fibres selon la revendication 1 **caractérisé en ce que** le brin, au nombre du moins un, est un fil de filaments dont le nombre de filaments est d'au moins 12000 filaments.

3. Procédé de fabrication d'une préforme de fibres selon la revendication 1 ou 2 **caractérisé en ce que** le brin, au nombre du moins un, est un fil de filaments pré-imprégné et **en ce que** le liant est constitué d'une première et d'une deuxième composition de résines, les filaments du fil de filaments étant imprégnés d'une première composition de résines et étant au moins partiellement reliés par l'intermédiaire de la première composition de résines, la première composition de résines contenant au moins deux résines Bisphénol A Epichlorhydrine H1 et H2, en un rapport pondéral de 1,1 à 1,4, H1 présentant une valeur époxide de 1850 à 2400 m mol/kg, une masse moléculaire moyenne M_{N} de 800 à 1000 g/Mol et étant solide à température ambiante et H2 présentant une valeur époxide de 5000 à 5600 m mol/kg, une masse moléculaire moyenne M_{N} < 700 g/Mol et étant liquide à température ambiante et renfermant en outre un polyhydroxyéther P1 aromatique qui présente un indice d'acide de 40 à 55 mg KOH/g et une masse moléculaire moyenne M_{N} de 4000 à 5000 g/Mol et le fil de filaments pré-imprégné présentant sur son côté extérieur une deuxième composition de résines sous forme de particules ou de gouttes qui adhèrent aux filaments, la deuxième composition de résines étant solide à température ambiante, étant doté d'une température de fusion qui se situe dans la plage allant de 80°C à 150°C et se présentant sur le côté extérieur du fil en une concentration allant de 0,5 % à 10 % en poids par rapport au poids total du fil de filaments pré-imprégné, et au moins 50 % de la surface du côté extérieur du fil étant exempts de la deuxième composition de résines et l'intérieur du fil étant exempt de la deuxième composition de résines.

4. Procédé de fabrication d'une préforme de fibres selon la revendication 2 ou 3 **caractérisé en ce que** le liant se présente en une concentration, par rapport au poids total de fil de filaments doté de liant, qui se situe dans la plage allant de 2 % à 14 % en poids.

5. Procédé de fabrication d'une préforme de fibres selon la revendication 1 **caractérisé en ce que** le brin, au nombre du moins un, est un élément pré-imprégné comportant des fibres de renforcement disposées unidirectionnellement dans la direction d'étendue du brin.

6. Procédé de fabrication d'une préforme de fibres selon la revendication 5 **caractérisé en ce que** le liant se présente en une concentration, par rapport à la masse surfacique de l'élément pré-imprégné se situant entre 15 % en poids et 70 % en poids.

7. Procédé de fabrication d'une préforme de fibres selon une ou plusieurs des revendications 1 à 6 **caractérisé en ce que** le brin, au nombre du moins un, est coupé dans le dispositif de séparation longitudinale en plus de deux brins partiels.

8. Procédé de fabrication d'une préforme de fibres selon une ou plusieurs des revendications 1 à 7 **caractérisé en ce que** le brin, au nombre du moins un, présente un rapport entre sa largeur et son épaisseur d'au moins 20.

9. Procédé de fabrication d'une préforme de fibres selon une ou plusieurs des revendications 1 à 8 **caractérisé en ce que** la largeur des faisceaux partiels se situe dans la plage allant de 0,5 mm à 5 mm.

10. Procédé de fabrication d'une préforme de fibres selon une ou plusieurs des revendications 1 à 9 **caractérisé en ce que** les faisceaux de fibres coupés au moyen de l'ensemble de mise à longueur présentent une longueur qui se situe dans la plage allant de 10 mm à 100 mm.

11. Procédé de fabrication d'une préforme de fibres selon une ou plusieurs des revendications 1 à 10 **caractérisé en ce que** plusieurs brins de fibres de renforcement dotées d'un liant sont amenés à la tête de dépôt, ces plusieurs brins pouvant être égaux ou différents.

12. Procédé de fabrication d'une préforme de fibres selon une ou plusieurs des revendications 1 à 11 **caractérisé en ce que** la tête de dépôt est reliée à un ensemble de positionnement susceptible d'être commandé, au moyen duquel la tête de dépôt est déplacée par rapport à la surface.

13. Procédé de fabrication d'une préforme de fibres selon une ou plusieurs des revendication 1 à 12 **caractérisé en ce que** les faisceaux de fibres sont chauffé en aval de l'ensemble de mise à longueur et avant le dépôt sur la surface et/ou sur les faisceaux de fibres déposés sur la surface.

14. Procédé de fabrication d'une préforme de fibres selon une ou plusieurs des revendications 1 à 13 **caractérisé en ce que** les faisceaux de fibres sont déchargés de l'ensemble de mise à longueur par l'intermédiaire du canal de buse d'une tête de buse mise sous pression d'air comprimé.

15. Procédé de fabrication d'une préforme de fibres selon une ou plusieurs des revendications 1 à 14 **caractérisé en ce qu'**en même temps que les faisceaux de fibres un matériau matrice sous forme de particules ou de gouttelettes est pulvérisé sur la surface et/ou sur les faisceaux de fibres déposés sur la surface.

16. Procédé de fabrication d'une préforme de fibres selon la revendication 15 **caractérisé en ce qu'**un matériau matrice sous forme de particules est introduit dans le canal de buse, lequel est pulvérisé en même temps que les faisceaux de fibres sur la surface et/ou sur les faisceaux de fibres déposés sur la surface.

17. Procédé de fabrication d'une préforme de fibres selon une ou plusieurs des revendications 1 à 16 **caractérisé en ce qu'**une opération de compactage se raccorde à l'opération de dépôt des faisceaux de fibres, dans laquelle les faisceaux de fibres de renforcement déposés sont compactés en vue d'obtenir une proportion en volume de fibres plus importante.

18. Procédé de fabrication d'une pièce en matériau composite comportant des fibres, en utilisant une préforme de fibres fabriquée selon une ou plusieurs des revendications 1 à 17, comprenant les opérations suivantes :
- Introduction de la préforme de fibres dans un dispositif de mise en forme,
- Application de pression ou de vide et/ou d'une augmentation de température sur la préforme de fibres, en vue de la formation de la pièce en matériau composite comportant des fibres,
- Refroidissement de la pièce de matériau composite comportant des fibres,
- Retrait hors du dispositif de mise en forme de la pièce de matériau composite comportant des fibres.
